# FASCICULE DE BREVET EUROPEEN

(11) **EP 1 187 392 B1**
(45) Date de publication et mention de la délivrance du brevet: **26.04.2006**
(21) Numéro de dépôt: 01460050.6
(22) Date de dépôt: 05.09.2001
(51) Int. Cl.: H04L 12/14

(54) **Procédé et système de paiement des services effectuées au sein d'un réseau de transmision de paquets**
Verfahren und System zur Bezahlung von Diensten eines Paketkernnetzwerks
Process and system for payment of services provided in the core packet network

(30) Priorité: 07.09.2000 FR 0011437
(43) Date de publication de la demande: 13.03.2002
(73) Titulaire: Cegetel Groupe, 92915 Paris La Défense (FR)
(72) Inventeur: Bouthors, Nicolas, 35240 Meylan (FR)
(74) Mandataire: Vidon, Patrice

(56) Documents cités:
- WO-A-97/37462
- US-A- 5 802 497
- US-A- 6 088 687

## Description

Le domaine de l'invention est celui des réseaux de transmission de données par paquets, et notamment, mais non exclusivement, des réseaux de type Internet.

D'une façon générale, de tels réseaux permettent d'établir des sessions, chacune entre un équipement source et un équipement destination, interconnectés via un ou plusieurs noeuds du réseau. Au cours de chaque session, l'équipement destination et/ou un ou plusieurs noeuds du réseau effectuent des opérations de transmission et/ou de service. L'équipement destination et/ou le(s) noeud(s) qui effectuent les opérations précitées sont utilisés par un opérateur du réseau et/ou un fournisseur de service. Dans la présente description, par fournisseur de service on entend ici également un fournisseur de contenu.

Par opérations de transmission, on entend des opérations de transport de paquets de données sur le réseau. Par opérations de service, on entend tous types d'opérations en rapport avec le contenant ou le contenu des paquets de données transmis. Les opérations de service consistent par exemple en un cryptage/décryptage des données contenues dans les paquets, ou encore en une exécution d'un code exécutable ou interprétable d'un programme ou d'une partie de programme contenue dans les paquets.

Les opérations de transmission et/ou de service permettent par exemple la diffusion d'oeuvres audio ou vidéo sur le réseau Internet. Dans ce cas, un client (l'équipement source, par exemple) envoie à un fournisseur de service (l'équipement destination, par exemple) une requête concernant une oeuvre donnée, et en retour le fournisseur de service retourne au client un fichier de données audio ou vidéo relatives à l'oeuvre donnée.

Plus précisément, l'invention concerne l'adaptation du contenu et/ou du coût de ces opérations de transmission et/ou de service.

Dans un souci de simplification, on discute par la suite essentiellement du cas Internet. Il est clair cependant que l'invention n'est pas limitée à ce type particulier de réseau et s'applique plus généralement à tout type de réseau de transmission de données par paquets.

Comme expliqué en détail dans le document de brevet WO 9733404 (LELEU), il apparaît difficile, voire impossible, de mettre en oeuvre sur le réseau Internet les techniques classiques de paiement des opérations effectuées sur les réseaux. En effet, le réseau Internet ne possède pas d'administration centralisée nécessaire à la mise en oeuvre de ces techniques classiques de paiement, qui consistent principalement en une facturation fonction soit de la durée de connexion entre deux équipements (pour une vitesse et une distance de transmission des données prédéfinies), soit de la quantité de données échangées entre deux équipements (en tenant compte de la vitesse de transmission des données).

Pour cette raison, la technique actuelle de paiement des opérations effectuées sur le réseau Internet consiste à facturer uniquement l'accès en un point physique du réseau. Comme indiqué dans le document de brevet précité, cette facturation est soit forfaitaire, soit elle prend en compte la quantité de données émises vers l'ensemble du réseau, ou bien la totalité de données reçues de la totalité du réseau.

Malheureusement, cette technique actuelle de paiement ne permet pas une facturation juste et équitable des opérations de transmission et/ou de service effectuées au sein du réseau Internet. En effet, actuellement, la facturation des opérations de transmission et/ou de service n'est pas fonction du chemin parcouru par et de la vitesse de transmission des paquets de données.

Il a donc été proposé, dans le document de brevet WO 9733404 (LELEU), une nouvelle technique, appelée "technique des jetons" dans la suite de la description. Elle est basée sur l'insertion de jetons de paiement dans les flux de paquets, et permettant à chaque paquet de données véhiculé par le réseau d'acquitter lui-même le coût d'une opération de transmission relative à son propre transport, ou le coût d'une opération de service relative à son propre contenant ou contenu.

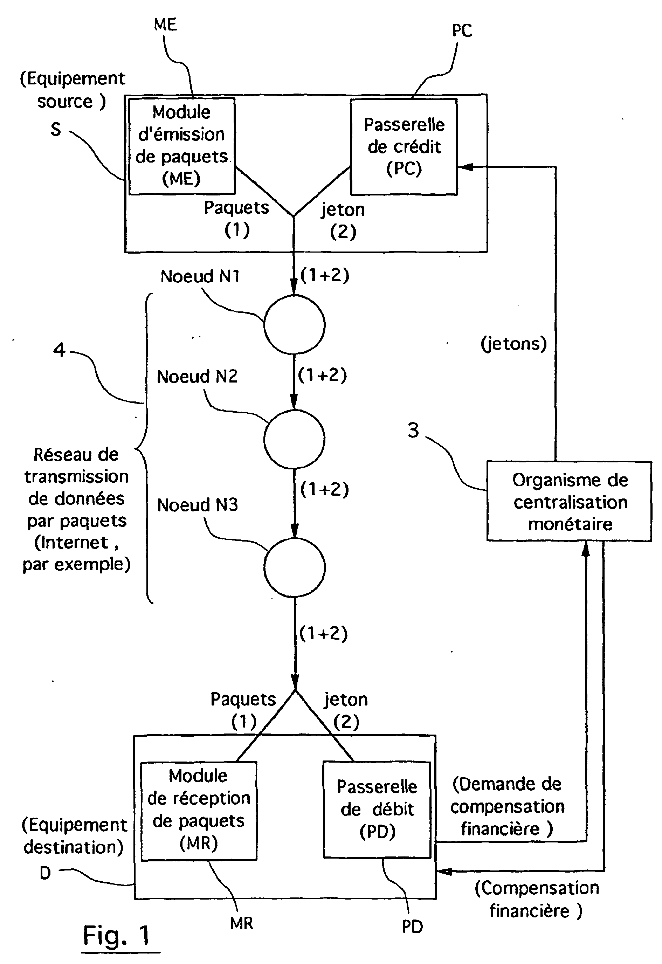

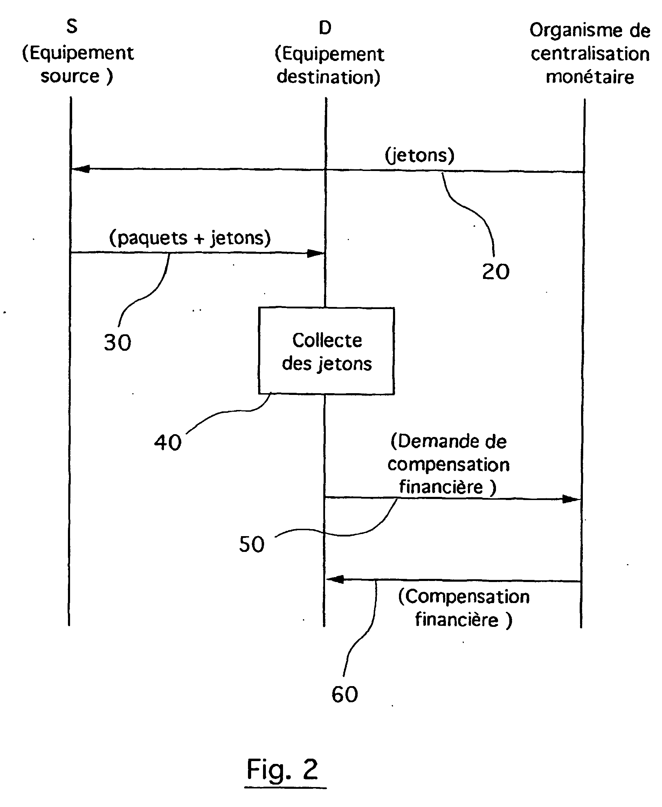

On résume maintenant brièvement, en relation avec les figures 1 et 2, le concept général de cette technique des jetons. Le réseau de transmission de données par paquet est par exemple le réseau Internet 4. L'équipement source S (et/ou au moins un noeud, dit noeud de crédit) comprend un module ME d'émission de paquets 1 et une passerelle de crédit PC. Cette dernière PC affecte à chaque paquet de données émis, un jeton de paiement 2 qui possède une valeur initiale représentative d'un crédit d'unités monétaires préalablement acquises (20) auprès d'un organisme de centralisation monétaire (ou "Toll Center") 3. Chaque paquet 1 est donc émis (30) avec le jeton de paiement 2 qui lui est affecté. L'équipement destination D (et/ou au moins un noeud, dit noeud de débit, situé en aval dudit au moins un noeud de crédit) comprend un module MR de réception de paquets 1 et une passerelle de débit PD. Cette dernière reçoit le jeton affecté à chaque paquet reçu 1 et le modifie (40) de façon à diminuer sa valeur initiale d'un montant représentatif du coût des opérations à effectuer, pour le paquet reçu 1, par l'équipement destination D (et/ou ledit au moins un noeud de débit). Enfin, l'équipement destination D (et/ou chaque noeud de débit), dans lequel est compris une dite passerelle de débit PD, demande à (50) et reçoit de (60) l'organisme de centralisation monétaire 3, pour chaque paquet 1 reçu pendant la session, une compensation financière du montant représentatif.

Dans la suite de la description, la modification (30) du jeton de paiement par diminution de sa valeur initiale, est parfois aussi appelée, plus simplement, "collecte du jeton de paiement".

Dans l'exemple illustré sur les figures 1 et 2, seul l'équipement source S comprend une passerelle de crédit PC et seul l'équipement destination D comprend une passerelle de débit PD. Il est clair cependant que, d'une façon générale, un ou plusieurs noeuds de crédit peuvent également (ou alternativement) comprendre une passerelle de crédit PC, et un ou plusieurs noeuds de débit peuvent également (ou alternativement) comprendre une passerelle de dédit PD.

Dans un mode de réalisation particulier de cette technique des jetons, l'équipement source est utilisé par un fournisseur d'accès (ou ISP, pour "Internet Service Provider", ou encore IAP, pour "Internet Access Provider"), de façon que des abonnés auprès de ce fournisseur d'accès puissent accéder au réseau de transmission de données par paquets. Ainsi, la passerelle de crédit, qui est mise en place chez le fournisseur d'accès, affecte des jetons aux paquets (c'est-à-dire insère des jetons dans les flux IP) des clients qui accèdent à tel ou tel service offert par un fournisseur de service. Un service est par exemple reconnu par son adresse IP et son numéro de port (ce dernier identifiant à quel protocole de niveau supérieur la requête doit être passée). De façon classique, les abonnés sont reliés à leur fournisseur d'accès par (au moins) un autre réseau de communication, tel que le réseau téléphonique commuté ("réseau fixe", RTC) ou encore un réseau de radiocommunication ("réseau mobile", par exemple selon le standard GSM).

Cette technique des jetons présente de nombreux avantages. Elle permet notamment une facturation juste et équitable des opérations de transmission et/ou de service effectuées au sein d'un réseau de transmission de données par paquets, par exemple de type Internet. Elle peut aussi constituer un moyen de paiement électronique, associé au contenu des paquets, dans les noeuds du réseau. En effet, le jeton de paiement affecté à chaque paquet de données permet de financer tout type d'opération (transport et/ou service) effectuée par l'équipement destination ou n'importe quel noeud du réseau dans lequel le paquet va résider.

La technique des jetons prévoit, optionnellement, une adaptation "en amont" (c'est-à-dire dans l'équipement source ou dans le noeud de crédit) du contenu et/ou du coût des opérations de transmission et/ou de service.

Plus précisément, la technique des jetons, sous sa forme actuelle, prévoit que lors de l'étape de création du jeton (c'est-à-dire avant son insertion dans un paquet), la passerelle de crédit calcule une valeur numérique constituant un crédit d'unités de péage, qui est fonction du nombre d'opérations réalisables avec ce crédit, de la qualité de service de ces opérations, et du type de ces opérations. Dans le cas d'opérations de transport, la valeur numérique calculée est par exemple fonction de l'adresse de destination du paquet, du nombre de noeuds traversés ou de la vitesse d'échange des données. Dans tous les cas, les différents paquets se voient affecter des jetons possédant des valeurs monétaires distinctes et calculées de façon prédéterminée.

Toutefois, une telle adaptation "en amont" du contenu et/ou du coût des opérations de transmission et/ou de service n'est pas satisfaisante.

En effet, sa mise en oeuvre au sein de la passerelle de crédit est très complexe puisque pour créer chaque jeton, la passerelle de crédit doit impérativement connaître et tenir compte de la ou des opérations que ce jeton va financer et autoriser. Cette complexité est encore accrue lorsque le gestionnaire de la passerelle de crédit est un fournisseur d'accès à Internet pour une pluralité d'abonnés. Chacun des abonnés possèdent en effet ses propres spécificités quant aux nombres, à la qualité de service et au type des opérations à effectuer.

En outre, ceci implique que les prestataires des opérations (typiquement les fournisseurs de service) informent de façon continue les gestionnaires des passerelles de crédit de toutes les modifications qu'ils entendent apporter aux prestations (opérations) qu'ils sont susceptibles d'offrir. Or, ceci va clairement à l'encontre du souhait fondamental des fournisseurs de service de rester aussi indépendant que possible des gestionnaires des passerelles de crédit (notamment lorsque ces derniers sont des fournisseurs d'accès à Internet).

En résumé, la réalisation d'une adaptation du contenu et/ou du coût des opérations pose aujourd'hui problème. Pour cette raison, et en vue de simplifier la compensation, seule une mise en oeuvre avec des jetons de valeur d'achat fixe semble actuellement réellement envisageable.

On connaît également, à travers la demande de brevet intematiomate WO 97/37462. une technique d'allocation des coûts dans un réseau. L'auteur propose d'utiliser les champs d'adresse de source et destination associés à un service de transmission de données dans un but d'influencer et même déterminer la politique de facturation. Contrairement à ce qui est divulgué dans la présente invention, dans ce document il est précisément évité d'introduire de nouveaux champs dans les protocoles de communication à l'exception bien entendu des champs d'adresse source et destination d'un protocole de communication. Ce document ne propose pas, ni même ne mentionne, la possibilité de modifier une adresse pour en surcharger le contenu avec une information de facturation indépendante. Elle ne propose que d'utiliser une identifiant de la source ou de la destination qui soit connu par un élément intermédiaire comme ayant une propriété de facturation en même temps qu'une propriété de routage. En effet, tous les équipements intermédiaire de routage doivent connaître l'adresse source et l'adresse de destination indépendamment de la notion de facturation. En outre, ce document ne propose ni même ne mentionne que l'équipement intermédiaire puisse modifier les adresses sources et destinations, ce qui est justement un objet principal de l'invention. En effet, dans un réseau de communication il n'est pas possible de modifier les adresses sources et destinations de façon dynamique. Il n'est pas donc pas possible dans un système tel que celui décrit dans ce document, d'imaginer qu'un élément intermédiaire modifie une adresse source ou une adresse destination dynamiquement dans le but d'effectuer une opération liée à la facturation comme par exemple de débiter un compte ou de prélever une certaine quantité de valeur via un mécanisme de jetons.

L'invention a notamment pour objectif de pallier cet inconvénient majeur de l'état de la technique.

Plus précisément, l'un des objectifs de la présente invention est de fournir un procédé et un système constituant un perfectionnement à la technique des jetons discutée ci-dessus, de façon que cette dernière puisse être utilisée tout en permettant une adaptation aisée du contenu et/ou du coût des opérations de transmission et/ou de service.

L'invention a également pour objectif de fournir de tels procédé et système, permettant aux prestataires des opérations (typiquement les fournisseurs de service) de rester aussi indépendant que possible des gestionnaires des passerelles de crédit (typiquement les fournisseurs d'accès à Internet).

Ces différents objectifs, ainsi que d'autres qui apparaîtront par la suite, sont atteints selon l'invention à l'aide d'un procédé d'adaptation du contenu et/ou du coût d'opérations de transmission et/ou de service effectuées au sein d'un réseau de transmission de données par paquets, lors d'une session entre un équipement source et un équipement destination interconnectés via au moins un noeud dudit réseau, ledit équipement destination et/ou ledit au moins un noeud étant utilisé(s) par au moins un opérateur et/ou au moins un fournisseur de service. Le procédé est tel que :
- dans ledit équipement source et/ou dans au moins un noeud, dit noeud de crédit, une passerelle de crédit affecte à chaque paquet de données émis par ledit équipement source, un jeton de paiement qui possède une valeur initiale représentative d'un crédit d'unités monétaires préalablement acquises auprès d'un organisme de centralisation monétaire ;
- dans ledit équipement destination et/ou dans au moins un noeud, dit noeud de débit, situé en aval dudit au moins un noeud de crédit, une passerelle de débit modifie le jeton de paiement affecté à chaque paquet de données reçu, de façon à diminuer ladite valeur initiale du jeton de paiement, d'un montant représentatif du coût des opérations à effectuer, pour ledit paquet reçu, par ledit équipement destination et/ou ledit au moins un noeud de débit ;
- ledit équipement destination et/ou chaque noeud de débit, dans lequel est compris une dite passerelle de débit, reçoit dudit organisme de centralisation monétaire, pour chaque paquet reçu pendant ladite session, une compensation financière dudit montant représentatif.

Selon l'invention, au moins un desdits jetons de paiement comprend, outre ladite valeur initiale représentative d'un crédit d'unités monétaires, au moins une information d'adaptation d'opérations, permettant audit équipement destination et/ou audit au moins un noeud de débit d'adapter le contenu des opérations à effectuer et/ou le coût réellement facturé audit équipement source et/ou audit au moins un noeud de crédit, pour effectuer lesdites opérations.

Le principe général de l'invention consiste donc à effectuer une adaptation "en aval" (c'est-à-dire dans le noeud de débit ou dans l'équipement destination) du contenu et/ou du coût des opérations de transmission et/ou de service.

De cette façon, le prestataire des opérations (typiquement les fournisseurs de service qui gère l'équipement destination dans lequel est comprise la passerelle de débit) gère lui-même le contenu et/ou le coût des opérations qu'il effectue. Il dispose ainsi d'une grande liberté pour personnaliser ces opérations et/ou leurs modes de facturation. Il reste indépendant du gestionnaire de l'équipement source ou du noeud de crédit (typiquement le fournisseur d'accès à Internet), qui se contente d'enrichir les jetons de paiement d'informations pertinentes puis d'insérer ces jetons de paiement dans les paquets.

Les informations d'adaptation d'opérations peuvent être insérées dans les jetons de paiement selon tout type de format, convenu entre le gestionnaire de la passerelle de crédit et le gestionnaire de la passerelle de débit.

Préférentiellement, ladite au moins une information d'adaptation d'opérations appartient au groupe comprenant des informations relatives à un utilisateur, direct ou indirect, dudit équipement source et/ou dudit au moins un noeud de crédit.

Par utilisateur indirect, on entend notamment un abonné auprès d'un fournisseur d'accès utilisant l'équipement source (voir description détaillée ci-après).

Dans un premier mode de réalisation particulier de l'invention, pour adapter le coût réellement facturé, ledit équipement destination et/ou ledit au moins un noeud de débit effectue les étapes suivantes :
- détermination dudit coût réellement facturé, en fonction de ladite au moins une information d'adaptation d'opérations ;
- diminution de ladite valeur initiale du jeton de paiement, d'un montant moyen prédéterminé représentatif du coût moyen des opérations à effectuer ;
- modification de la valeur courante d'un compte associé relatif à un utilisateur, direct ou indirect, dudit équipement source et/ou dudit au moins un noeud de crédit, par ajout ou retrait d'une somme fonction de la différence entre ledit coût réellement facturé et ledit montant moyen prédéterminé.

Ainsi, dans ce premier mode de réalisation, toutes les opérations présentent un même coût, appelé coût moyen, pour la passerelle de crédit. C'est le gestionnaire de l'équipement destination ou du noeud de débit (typiquement le fournisseur de service) qui adapte le coût réellement facturé en "jouant" sur la valeur courante d'un compte tampon. Il s'agit d'un compte (par exemple pré-payé) dont dispose le gestionnaire de la passerelle de crédit auprès du gestionnaire de l'équipement destination ou du noeud de débit, et qui est relatif à l'utilisateur concerné. Pour une opération donnée, la somme ajoutée ou retirée sur ce compte est par exemple égale à la différence entre le coût réellement facturé et le montant moyen prédéterminé de cette opération donnée.

Dans un second mode de réalisation particulier de l'invention, pour adapter le coût réellement facturé, ledit équipement destination et/ou ledit au moins un noeud de débit effectue les étapes suivantes :
- détermination dudit coût réellement facturé, en fonction de ladite au moins une information d'adaptation d'opérations ;
- diminution de ladite valeur initiale du jeton de paiement, d'un montant moyen prédéterminé représentatif du coût moyen des opérations à effectuer ;
- renvoi audit équipement source et/ou audit au moins un noeud de crédit d'un jeton de paiement qui possède une valeur fonction de la différence entre ledit coût réellement facturé et ledit montant moyen prédéterminé, de façon que la valeur dudit jeton de paiement renvoyé soit restituée à un utilisateur, direct ou indirect, dudit équipement source et/ou dudit au moins un noeud de crédit.

Ce second mode de réalisation se distingue du premier en ce que le gestionnaire de l'équipement destination ou du noeud de débit (typiquement le fournisseur de service) adapte le coût réellement facturé en renvoyant un ou plusieurs jetons au gestionnaire de la passerelle de crédit (et non pas en "jouant" sur la valeur courante d'un compte tampon).

Dans un mode de réalisation avantageux de l'invention, ledit équipement source est utilisé par un fournisseur d'accès audit réseau de transmission de données par paquets, et permet de fournir ledit accès à au moins un abonné auprès dudit fournisseur d'accès, dit utilisateur indirect. Ladite au moins une information d'adaptation d'opérations est ajoutée audit paquet par ledit fournisseur d'accès, et dépend de l'abonné pour qui ledit fournisseur d'accès émet ledit paquet.

Notamment, ceci permet au fournisseur de service de rester indépendant du fournisseur d'accès à Internet, pour ce qui est du contenu et du coût des opérations qu'il effectue pour les abonnés de cet opérateur d'accès.

Préférentiellement, ladite étape d'ajout par ledit fournisseur d'accès de ladite au moins une information d'adaptation d'opérations est facturée au moins en partie audit équipement destination et/ou audit au moins un noeud de débit.

Avantageusement, chaque jeton de paiement est affecté à un paquet donné par insertion dans ledit paquet et/ou dans au moins une structure d'encapsulage de niveau supérieur dudit paquet.

En d'autres termes, le jeton de paiement affecté à un paquet n'est pas forcément inséré dans le paquet lui-même, mais peut aussi être inséré dans un champ d'un protocole de niveau supérieur.

De façon avantageuse, ledit réseau de transmission de données par paquets est un réseau de type Internet.

De façon préférentielle, lesdites opérations de service appartiennent au groupe comprenant :
- des opérations de fourniture de données d'informations ;
- des opérations de fourniture de données vidéo ;
- des opérations de fourniture de données audio ;
- des opérations de fourniture de données de cartographie.

Cette liste n'est pas exhaustive. D'une façon générale, la présente invention s'applique à toutes les opérations de service et/ou de transmission. L'invention concerne également un système permettant la mise en oeuvre du procédé d'adaptation de contenu et/ou de coûts présenté ci-dessus. Le système selon l'invention comprend des moyens d'inclusion dans au moins un desdits jetons de paiement, outre ladite valeur initiale représentative d'un crédit d'unités monétaires, d'au moins une information d'adaptation d'opérations. Ledit équipement destination et/ou ledit au moins un noeud de débit comprend des moyens d'adaptation, en fonction de ladite au moins une information d'adaptation d'opérations :
- du contenu des opérations à effectuer,
- et/ou du coût réellement facturé audit équipement source et/ou audit au moins un noeud de crédit, pour effectuer lesdites opérations.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique d'un mode de réalisation particulier des procédé et système de paiement selon l'art antérieur, permettant d'expliciter la technique des jetons ;
- la figure 2 illustre le fonctionnement du mode de réalisation particulier des procédé et système selon l'art antérieur présenté sur la figure 1, à travers les échanges effectués entre l'équipement source, l'équipement destination et l'organisme de centralisation monétaire ;
- la figure 3 présente un schéma synoptique d'un mode de réalisation particulier des procédé et système d'adaptation de contenu et/ou de coût selon l'invention.

L'invention concerne donc un procédé et un système d'adaptation du contenu et/ou du coût d'opérations de transmission et/ou de service effectuées au sein d'un réseau de transmission de données par paquets.

Il s'agit d'un perfectionnement à la technique des jetons, dont le concept de base est connu de l'homme du métier et est décrit de façon détaillée notamment dans le document de brevet WO 9733404 (LELEU).

Les figures 1 et 2, qui illustrent un mode de mode de réalisation particulier de ce concept de base connu, ont déjà été discutées dans l'introduction de la présente description.

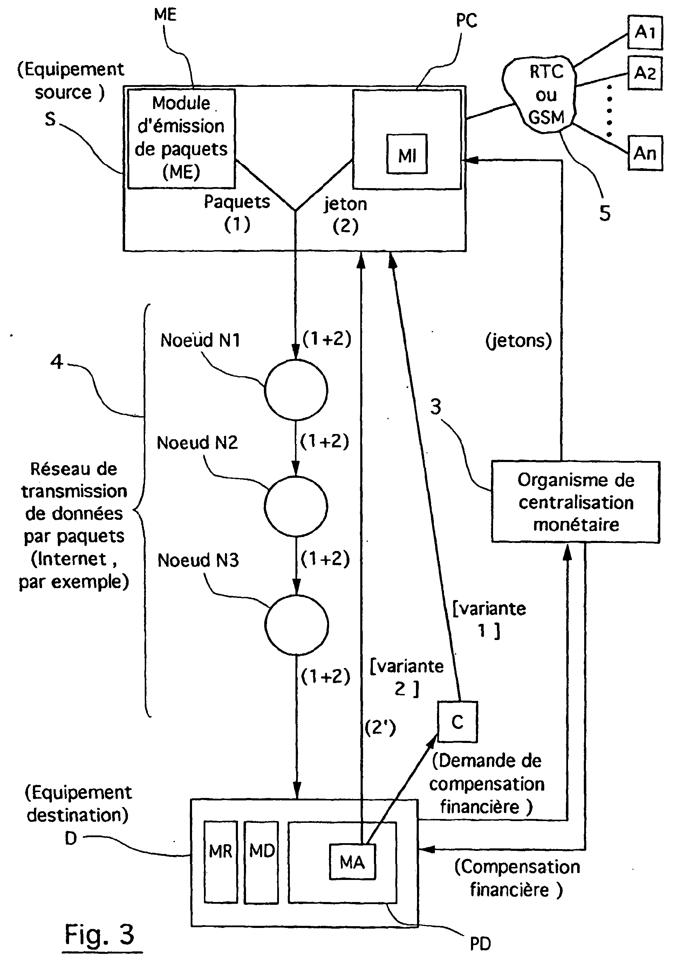

On présente maintenant, en relation avec la figure 3, un mode de réalisation particulier des procédé et système d'adaptation de contenu et/ou de coût selon l'invention. Les éléments déjà présents sur les figures 1 et 2 conservent les mêmes références sur la figure 3.

Dans ce mode de réalisation particulier, le réseau de transmission de données par paquets est le réseau Internet 4. De façon classique, il comprend une pluralité de noeuds de réseau, dont notamment ceux référencés N1, N2, ..., N3 sur la figure 3. Par noeud de réseau, on entend tout type d'équipement de réseau (commutateur, serveur, routeur, ...).

L'équipement source S est une passerelle d'accès ("Gateway"), gérée par un fournisseur d'accès (ISP ou IAP) au réseau Internet 4 pour une pluralité d'abonnés A₁ à Aₙ. Ces derniers sont reliés à la passerelle d'accès S du fournisseur d'accès par un autre réseau de communication 5 (RTC ou réseau GSM par exemple). La passerelle d'accès S comprend un module ME d'émission de paquets de données 1 sur le réseau Internet 4, ainsi qu'une passerelle de crédit PC permettant d'insérer un jeton de paiement dans chaque paquet 1 transmis.

Les jetons peuvent être fabriqués et reconnus à l'aide d'une fonction de hachage ("hashing"), par la passerelle de crédit et la passerelle de débit respectivement. Il y a dans ce cas un certain niveau de sécurité.

La passerelle de crédit PC comprend en outre des moyens MI d'inclusion dans chaque jeton de paiement 2, outre la valeur initiale représentative d'un crédit d'unités monétaires, d'(au moins) une information d'adaptation d'opérations.

Ces informations d'adaptation peuvent être insérées soit dans l'en-tête du jeton, soit dans la partie utile qui stocke déjà la valeur monétaire. Elles sont par exemple relatives à l'abonné pour qui est émis le paquet dans lequel est inséré le jeton. Il s'agit par exemple de l'identité de cet abonné, de sa localisation, de son appartenance à une classe d'utilisateurs, ou de toute autre information permettant de définir au moins un "profil" qui lui est propre. Ces informations peuvent être stockées et/ou calculées par la passerelle d'accès S, ou fournies à celle-ci par tout équipement approprié (par exemple un récepteur GPS compris dans le terminal de l'abonné, dans le cas d'informations de localisation). L'insertion des informations d'adaptation dans les jetons peut être, au moins en partie, à la charge du fournisseur de service.

L'équipement destination D est un serveur de service, géré par un fournisseur de service, permettant par exemple la diffusion en ligne d'oeuvres multimédia. Plus généralement, le serveur de service permet d'effectuer une ou plusieurs des opérations suivantes :
- fourniture de données d'informations, par exemple sous forme de pages Web;
- fourniture de données vidéo, par exemple au format "MPG1", "MPEG2", "MPEG4", "RealVideo", "AVI" et "ASF" de Microsoft, "Divx", etc ;
- fourniture de données audio, par exemple au format "au", "wav", "ra", "MP3", "MID", etc ;
- fournitures de données de cartographie, par exemple au format "SVG", "TMF", "TPF" d'OptEWay, etc ;
- etc.

Le serveur de service D comprend un module MR de réception de paquets de données 1, des moyens MD de diffusion d'oeuvres multimédia (en réponse aux requêtes qu'il reçoit), ainsi qu'une passerelle de débit PD permettant de collecter les jetons de paiements 2 insérés dans les paquets 1 qu'il reçoit.

La passerelle de débit PD comprend en outre des moyens MA d'adaptation, en fonction des informations d'adaptation précitées insérées dans le paquet, du contenu des opérations à effectuer et/ou du coût réellement facturé au fournisseur d'accès pour l'opération concernée. Le fournisseur d'accès se charge de répercuter ce coût auprès de l'abonné concerné par cette opération.

Il est à noter que la passerelle de débit peut extraire les jetons et former un ticket de facturation (ou CDR, pour "Call Detail Record") lorsque la cession (de service dans le cas présent) se termine. Les passerelles de crédit et de débit maintiennent ainsi une notion de session durant le temps de la connexion de service. Elles peuvent conditionner l'allocation définitive des jetons au fournisseur de contenu à la bonne fin de la connexion (de type TCP). Il s'agit en fait d'un mécanisme de type transactionnel, avec une fonction de reprise ("rollback").

À titre d'exemple illustratif, on décrit maintenant le fonctionnement de l'invention dans le cas où un abonné A, émet une requête vers le serveur de service D, via la passerelle d'accès S du fournisseur d'accès, afin de recevoir en ligne une oeuvre donnée.

On suppose qu'au préalable, la passerelle d'accès S (c'est-à-dire le fournisseur d'accès) s'est procuré (20) auprès d'un organisme de centralisation monétaire ("Toll Center") 3 une pluralité de jetons de paiement 2, possédant chacun une valeur initiale représentative d'un crédit d'unités monétaires.

Le module ME d'émission de paquets compris dans la passerelle d'accès S génère (au moins) un paquet de données contenant la requête de l'abonné A₁. La passerelle de crédit PC comprise dans la passerelle d'accès S insère dans ce paquet 1 un jeton de paiement 2 contenant lui-même des informations d'adaptation telles que présentées en détail ci-dessus. Alternativement, le jeton 2 est inséré dans une structure d'encapsulage de niveau supérieur du paquet (par exemple HTTP). La valeur initiale du jeton de paiement est dans le présent exemple égale à un montant moyen. La passerelle d'accès S émet sur le réseau Internet 4 le paquet 1 contenant le jeton 2, à destination du serveur de service D.

Le paquet 1 est reçu par le module MR de réception du serveur de service. La passerelle de débit PD, également comprise dans le serveur de service, collecte le jeton de paiement 2. C'est en contrepartie de ce dernier qu'une compensation financière va pouvoir être obtenue auprès de l'organisme de centralisation monétaire 3. Les moyens MA d'adaptation, également compris dans le serveur de service, extraient les informations d'adaptation contenues dans le jeton. Le paquet reçu est traité par les moyens MD de diffusion, éventuellement en fonction des informations d'adaptation extraites du jeton associé.

On présente maintenant, à titre d'exemple illustratif, deux variantes de réalisation de l'adaptation du coût de l'opération effectuée par le serveur de service.

Selon une première variante de l'adaptation du coût, le fournisseur de service (et plus précisément le module d'adaptation MA compris dans la passerelle de débit PD du serveur de service D) effectue les étapes suivantes :
- détermination, en fonction de l'information d'adaptation d'opérations contenue dans le paquet reçu 2, du coût réel devant être facturé au fournisseur d'accès ;
- "collecte du jeton", c'est-à-dire diminution de la valeur initiale de celui-ci d'un montant moyen prédéterminé, représentatif du coût moyen de l'opération à effectuer. Le fournisseur d'accès ne connaît que ce montant moyen. Dans le cas où le jeton permet le paiement d'une seule opération, la valeur initiale est égale au montant moyen ;
- modification de la valeur courante d'un compte C (relatif à l'abonné référencé A₁) que possède le fournisseur d'accès auprès du fournisseur de service (ou d'un organisme bancaire de ce dernier).

La modification de la valeur courante du compte C précité consiste par exemple en un ajout ou retrait d'une somme égale à la différence entre le coût réel et le montant moyen prédéterminé. En d'autres termes, le fournisseur de service crédite le compte du fournisseur d'accès si le montant réel est inférieur au montant moyen, ou le débite dans le cas contraire.

Selon une seconde variante de l'adaptation du coût, le fournisseur de service effectue les étapes suivantes :
- détermination, en fonction de l'information d'adaptation d'opérations contenue dans le paquet reçu 2, du coût réel devant être facturé au fournisseur d'accès ;
- "collecte du jeton" (voir ci-dessus) ;
- renvoi au fournisseur d'accès (par exemple à la passerelle d'accès S que gère celui-ci) d'un jeton de paiement 2' qui possède une valeur égale la différence entre le coût réel et le montant moyen.

Ainsi, le fournisseur peut restituer à l'abonné référencé A₁ (par exemple en modifiant sa prochaine facture) la valeur du jeton 2' que le fournisseur de service lui a renvoyé.

Dans le mode de réalisation particulier illustré sur la figure 3, seul l'équipement source S comprend une passerelle de crédit PC et seul l'équipement destination D comprend une passerelle de débit PD. Il est clair cependant que la présente invention s'applique également si un ou plusieurs noeuds, appelés noeuds de crédit, comprennent chacun une passerelle de crédit PC et/ou si un ou plusieurs noeuds, appelés noeuds de débit, comprennent chacun une passerelle de débit PD.

Par ailleurs, dans ce qui précède, les informations d'adaptation sont relatives au contenu et/ou au coût d'une opération de service. Cependant, la présente invention s'applique aussi à l'adaptation du contenu et/ou du coût d'opérations de transport.

Il est à noter qu'un même jeton de paiement peut permettre le paiement d'opération(s) de transmission et d'opération(s) de service. Dans ce cas, les informations d'adaptation peuvent être relatives au contenu et/ou au coût de chacune de ces opérations.

## Revendications

1. Procédé d'adaptation du contenu et/ou du coût d'opérations de transmission et/ou de service effectuées au sein d'un réseau (4) de transmission de données par paquets, lors d'une session entre un équipement source (S) et un équipement destination (D) interconnectés via au moins un noeud (N1, N2, ...) dudit réseau, ledit équipement destination et/ou ledit au moins un noeud étant utilisé(s) par au moins un opérateur et/ou au moins un fournisseur de service, ledit procédé étant tel que :
- dans ledit équipement source (S) et/ou dans au moins un noeud, dit noeud de crédit, une passerelle de crédit (PC) affecte à chaque paquet de données (1) émis par ledit équipement source (S) un jeton de paiement (2) qui possède une valeur initiale représentative d'un crédit d'unités monétaires préalablement acquises auprès d'un organisme de centralisation monétaire (3);
- dans ledit équipement destination (D) et/ou dans au moins un noeud, dit noeud de débit, situé en aval dudit au moins un noeud de crédit, une passerelle de débit (PD) modifie le jeton de paiement (2) affecté à chaque paquet de données (1) reçu, de façon à diminuer ladite valeur initiale du jeton de paiement (2), d'un montant représentatif du coût des opérations à effectuer, pour ledit paquet reçu, par ledit équipement destination (D) et/ou ledit au moins un noeud de débit ;
- ledit équipement destination (D) et/ou chaque noeud de débit, dans lequel est compris une dite passerelle de débit (PD), reçoit dudit organisme de centralisation monétaire (3), pour chaque paquet reçu pendant ladite session, une compensation financière dudit montant représentatif ;
**caractérisé en ce qu'**au moins un desdits jetons de paiement (2) comprend, outre ladite valeur initiale représentative d'un crédit d'unités monétaires, au moins une information d'adaptation d'opérations, permettant audit équipement destination et/ou audit au moins un noeud de débit d'adapter:
- le contenu des opérations à effectuer,
- et/ou le coût réellement facturé audit équipement sources (S) et/ou audit au moins un noeud de crédit, pour effectuer lesdites opérations.

2. Procédé selon la revendication 1, **caractérisé en ce que** ladite au moins une information d'adaptation d'opérations appartient au groupe comprenant des informations relatives à un utilisateur, direct ou indirect, dudit équipement source et/ou dudit au moins un noeud de crédit.

3. Procédé selon l'une quelconque des revendications 1 et 2, **caractérisé en ce que**, pour adapter le coût réellement facturé, ledit équipement destination et/ou ledit au moins un noeud de débit effectue les étapes suivantes :
- détermination dudit coût réellement facturé, en fonction de ladite au moins une information d'adaptation d'opérations ;
- diminution de ladite valeur initiale du jeton de paiement, d'un montant moyen prédéterminé représentatif du coût moyen des opérations à effectuer ;
- modification de la valeur courante d'un compte associé relatif à un utilisateur, direct ou indirect, dudit équipement source et/ou dudit au moins un noeud de crédit, par ajout ou retrait d'une somme fonction de la différence entre ledit coût réellement facturé et ledit montant moyen prédéterminé.

4. Procédé selon l'une quelconque des revendications 1 et 2, **caractérisé en ce que**, pour adapter le coût réellement facturé, ledit équipement destination et/ou ledit au moins un noeud de débit effectue les étapes suivantes :
- détermination dudit coût réellement facturé, en fonction de ladite au moins une information d'adaptation d'opérations ;
- diminution de ladite valeur initiale du jeton de paiement, d'un montant moyen prédéterminé représentatif du coût moyen des opérations à effectuer ;
- renvoi audit équipement source et/ou audit au moins un noeud de crédit d'un jeton de paiement qui possède une valeur fonction de la différence entre ledit coût réellement facturé et ledit montant moyen prédéterminé, de façon que la valeur dudit jeton de paiement renvoyé soit restituée à un utilisateur, direct ou indirect, dudit équipement source et/ou dudit au moins un noeud de crédit.

5. Procédé selon l'une quelconque des revendications 1 à 4, **caractérisé en ce que** ledit équipement source est utilisé par un fournisseur d'accès audit réseau de transmission de données par paquets, et permet de fournir ledit accès à au moins un abonné auprès dudit fournisseur d'accès, dit utilisateur indirect, et **en ce que** ladite au moins une information d'adaptation d'opérations est ajoutée audit paquet par ledit fournisseur d'accès, et dépend de l'abonné pour qui ledit fournisseur d'accès émet ledit paquet.

6. Procédé selon la revendication 5, **caractérisé en ce que** ladite étape d'ajout par ledit fournisseur d'accès de ladite au moins une information d'adaptation d'opérations est facturée au moins en partie audit équipement destination et/ou audit au moins un noeud de débit.

7. Procédé selon l'une quelconque des revendications 1 à 6, **caractérisé en ce que** chaque jeton de paiement est affecté à un paquet donné par insertion dans ledit paquet et/ou dans au moins une structure d'encapsulage de niveau supérieur dudit paquet.

8. Procédé selon l'une quelconque des revendications 1 à 7, **caractérisé en ce que** ledit réseau (4) de transmission de données par paquets est un réseau de type Internet.

9. Procédé selon l'une quelconque des revendications 1 à 8, **caractérisé en ce que** lesdites opérations de service appartiennent au groupe comprenant :
- des opérations de fourniture de données d'informations ;
- des opérations de fourniture de données vidéo ;
- des opérations de fourniture de données audio ;
- des opérations de fourniture de données de cartographie.

10. Système d'adaptation du contenu et/ou du coût d'opérations de transmission et/ou de service effectuées au sein d'un réseau (4) de transmission de données par paquets, lors d'une session entre un équipement source (S) et un équipement destination (D) interconnectés via au moins unnoeud (N1, N2, ...) ledit équipement destination et/ou ledit au moins un noeud étant utilisé(s) par au moins un opérateur et/ou au moins un fournisseur de service, ledit système étant tel que :
- ledit équipement source (3) et/ou au moins un noeud, dit noeud de crédit, comprend une passerelle de crédit (PC) permettant d'affecter à chaque paquet de donnée (1) émis par ledit équipement source (3), un jeton de paiement (2) qui possède une valeur initiale représentative d'un crédit d'unités monétaires préalablement acquises auprès d'un organisme de centralisation monétaire (3),
- ledit équipement destination (D) et/ou au moins un noeud, dit noeud de débit, situé en aval dudit au moins un noeud de crédit, comprend une passerelle de débit (PD) permettant de modifier le jeton de paiement (2) affecté à chaque paquet de données (1) reçu, de façon à diminuer ladite valeur initiale du jeton de paiemen (2), d'un montant représentatif du coût des opérations à effectuer, pour ledit paquet reçu, par ledit équipement destination (D) et/ou ledit au moins un noeud de débit ;
- ledit équipement destination (D) et/ou chaque noeud de débit, dans lequel est compris une dite passerelle de débit (PD) reçoit dudit organisme de centralisation monétaire (3), pour chaque paquet reçu pendant ladite session, une compensation financière dudit montant représentatif ;
**caractérisé en ce que** ledit système comprend des moyens d'inclusion dans au moins un desdits jetons de paiement (2), outre ladite valeur initiale représentative d'un crédit d'unités monétaires, d'au moins une information d'adaptation d'opérations,
et **en ce que** ledit équipement destination et/ou ledit au moins un noeud de débit comprend des moyens d'adaptation, en fonction de ladite au moins une information d'adaptation d'opérations :
- du contenu des opérations à effectuer,
- et/ou du coût réellement facturé audit équipement source (S) et/ou audit au moins un noeud de crédit, pour effectuer lesdites opérations.

## Patentansprüche

1. Verfahren zum Anpassen des Inhaltes und/oder der Betriebskosten für das Senden und/oder beim Ausführen von Dienstleistungen innerhalb eines Datenpakete übertragenden Netzwerkes (4), im Verlauf einer Sitzung zwischen einer Quelleneinrichtung (S) und einer Zielausrüstung (D), die über mindestens einen Knoten (N1, N2, ...) des besagten Netzwerkes miteinander verbunden sind, wobei die besagte Empfängerausrüstung und/oder der mindestens eine Knoten von mindestens einem Betreiber und/oder von mindestens einem Dienstleister genutzt wird und wobei das Verfahren derart gestaltet ist, dass:
- in der Quelleneinrichtung (S) und/oder in mindestens einem Knoten, der als Kreditknoten bezeichnet wird, eine Kreditübertragungsvorrichtung (PC) jedem von der Quelleneinrichtung (S) gesendeten Datenpaket (1) eine Zahlungswertmünze (2) zuordnet, deren Anfangswert repräsentativ für einen Kredit in Geldeinheiten ist, der vorher bei einer Organisation zum Zentralisieren von Zahlungen (3) erworben wurde;
- in der Empfängerausrüstung (D) und/oder in mindestens einem Knoten, der als Sollknoten bezeichnet wird und nach dem mindestens einen Kreditknoten angebracht ist, eine Sollübertragungsvorrichtung (PD) die einem jeden empfangenen Datenpaket (1) zugeordnete Zahlungswertmünze (2) so ändert, dass der Ausgangwert der Zahlungswertmünze (2) um einen Betrag verringert wird, der für die Kosten der durchzuführenden Operationen repräsentativ ist, wobei dieser Vorgang für das empfangene Datenpaket durch die Empfängerausrüstung (D) und/oder den mindestens einen Sollknoten durchgeführt wird;
- die Empfängerausrüstung (D) und/oder jeder Sollknoten, der eine Sollübertragungsvorrichtung (PD) enthält, von der Organisation zum Zentralisieren von Zahlungen (3) für jedes während der besagten Sitzung empfangene Datenpaket, einen finanziellen Ausgleich für den erwähnten repräsentativen Betrag erhält;
**dadurch gekennzeichnet, dass** mindestens eine der Zahlungswertmünzen (2) neben dem für einen Kredit in Geldeinheiten repräsentativen Ausgangswert mindestens eine Information zur Anpassung der Operationen umfasst, die es der Empfängerausrüstung und/oder dem mindestens einen Sollknoten ermöglicht:
- den Inhalt der durchzuführenden Operationen anzupassen,
- und/oder die tatsächlich der Quelleneinrichtung (S) und/oder dem mindestens einen Kreditknoten zur Durchführung der besagten Operationen in Rechnung gestellten Kosten anzupassen.

2. Verfahren nach Anspruch 1,
**dadurch gekennzeichnet, dass** die mindestens eine Information zum Anpassen von Operationen zu der Gruppe gehört, die Informationen über einen direkten oder indirekten Benutzer der Quelleneinrichtung und/oder des mindestens einen Kreditknoten enthält.

3. Verfahren nach einem der Ansprüche 1 oder 2,
**dadurch gekennzeichnet, dass**, um die tatsächlich in Rechnung gestellten Kosten anzupassen, die Empfängerausrüstung und/oder der mindestens eine Sollknoten die folgenden Schritte ausführen:
- Ermittlung der tatsächlich in Rechnung gestellten Kosten, als Funktion der mindestens einen Information zum Anpassen der Operationen;
- Verringerung des Ausgangswertes der Zahlungswertmünze um einen im Voraus festgelegten Durchschnittsbetrag, der für die durchschnittlichen Kosten der auszuführenden Operationen repräsentativ ist;
- Änderung des laufenden Wertes eines mit Bezug auf einen direkten oder indirekten Benutzer der besagten Quelleneinrichtung und/oder des besagten mindestens einen Kreditknotens zugeordneten Kontos, durch Addieren oder Subtrahieren eines Betrages als Funktion der Differenz zwischen den tatsächlich in Rechnung gestellten Kosten und dem im Voraus bestimmten Durchschnittsbetrag.

4. Verfahren nach einem der Ansprüche 1 oder 2,
**dadurch gekennzeichnet, dass**, um die tatsächlich in Rechnung gestellten Kosten anzupassen, die Empfängerausrüstung und/oder der mindestens eine Sollknoten die folgenden Schritte ausführt:
- Ermittlung der tatsächlich in Rechnung gestellten Kosten, als Funktion der mindestens einen Information zum Anpassen der Operationen;
- Verringerung des Ausgangswertes der Zahlungswertmünze um einen im Voraus festgelegten Durchschnittsbetrag, der für die durchschnittlichen Kosten der auszuführenden Operationen repräsentativ ist;
- Rücksendung einer Zahlungswertmünze an die Quellenausrüstung und/oder an den mindestens einen Kreditknoten, wobei der Wert dieser Zahlungswertmünze eine Funktion der Differenz zwischen den tatsächlich in Rechnung gestellten Kosten und dem im Voraus bestimmten Durchschnittsbetrag ist, so dass der Wert der besagten zurückgesandten Zahlungswertmünze dem direkten oder indirekten Benutzer der Quelleneinrichtung und/oder des mindestens einen Kreditknotens erstattet wird.

5. Verfahren nach einem der Ansprüche 1 bis 4,
**dadurch gekennzeichnet, dass** die Quelleneinrichtung von einem Zugangslieferanten zum besagte Datenpakete sendenden Netzwerk genutzt wird, wobei dieser Zugang mindestens einem Teilnehmer ermöglicht wird, der bei diesem Zugangslieferanten ein Abonnement abgeschlossen hat und der als indirekter Benutzer bezeichnet wird, sowie **dadurch**, dass die mindestens eine Information zum Anpassen von Operationen von dem Zugangslieferanten dem Datenpaket hinzugefügt wird, abhängig vom Abonnenten, für welchen der Zugangslieferant das Datenpaket sendet.

6. Verfahren nach Anspruch 5,
**dadurch gekennzeichnet, dass** der Schritt zum Hinzufügen der mindestens einen Information zum Anpassen von Operationen durch den besagten Zugangslieferanten zumindest teilweise der Empfängerausrüstung und/oder dem mindestens einen Sollknoten in Rechnung gestellt wird.

7. Verfahren nach einem der Ansprüche 1 bis 6,
**dadurch gekennzeichnet, dass** eine jede Zahlungswertmünze einem Datenpaket **dadurch** zugeordnet wird, dass sie in das besagte Paket und/oder in mindestens eine Einkapselungsstruktur höherer Ebene des besagten Datenpakets eingefügt wird.

8. Verfahren nach einem der Ansprüche 1 bis 7,
**dadurch gekennzeichnet, dass** es sich beim Netzwerk (4) zum Senden von Datenpaketen, um ein Netzwerk vom Typ Internet handelt.

9. Verfahren nach einem der Ansprüche 1 bis 8,
**dadurch gekennzeichnet, dass** die erwähnten Dienstleistungsoperationen zu der folgendes umfassenden Gruppe gehört:
- Operationen zum Liefern von Informationsdaten;
- Operationen zum Liefern von Videodaten;
- Operationen zum Liefern von Audiodaten;
- Operationen zum Liefern von kartographischen Daten.

10. System zum Anpassen des Inhaltes und/oder der Betriebskosten für das Senden und/oder beim Ausführen von Dienstleistungen innerhalb eines Datenpakete übertragenden Netzwerkes (4), im Verlauf einer Sitzung zwischen einer Quelleneinrichtung (S) und einer Empfängerausrüstung (D), die über mindestens einen Knoten (N1, N2, ...) des besagten Netzwerkes miteinander verbunden sind, wobei die besagte Empfängerausrüstung und/oder der mindestens eine Knoten von mindestens einem Betreiber und/oder von mindestens einem Dienstleister genutzt wird und wobei das System derart gestaltet ist, dass:
- die Quelleneinrichtung (S) und/oder der mindestens eine Knoten, der als Kreditknoten bezeichnet wird, eine Kreditübertragungsvorrichtung (PC) umfasst, die es erlaubt, einem jeden von der Quelleneinrichtung (S) gesendeten Datenpaket (1) eine Zahlungswertmünze (2) zuzuordnen, deren Anfangswert repräsentativ für einen Kredit in Geldeinheiten ist, der vorher bei einer Organisation zum Zentralisieren von Zahlungen (3) erworben wurde;
- die Empfängerausrüstung (D) und/oder der mindestens eine Knoten, der als Sollknoten bezeichnet wird und nach dem mindestens einen Kreditknoten angebracht ist, eine Sollübertragungsvorrichtung (PD) umfasst, die es ermöglicht, die einem jeden empfangenen Datenpaket (1) zugeordnete Zahlungswertmünze (2) so zu ändern, dass der Ausgangwert der Zahlungswertmünze (2) um einen Betrag verringert wird, der für die Kosten der durchzuführenden Operationen repräsentativ ist, wobei dieser Vorgang für das empfangene Datenpaket durch die Empfängerausrüstung (D) und/oder den mindestens einen Sollknoten durchgeführt wird;
- die Empfängerausrüstung (D) und/oder jeder Sollknoten, der eine Sollübertragungsvorrichtung (PD) enthält, von der Organisation zum Zentralisieren von Zahlungen (3) für jedes während der besagten Sitzung empfangene Datenpaket, einen finanziellen Ausgleich für den erwähnten repräsentativen Betrag erhält;
**dadurch gekennzeichnet, dass** das System über Mittel zum Einfügen mindestens einer Information zur Anpassung der Operationen in mindestens eine der Zahlungswertmünzen (2), neben dem für einen Kredit in Geldeinheiten repräsentativen Ausgangswert, verfügt und,
**dadurch**, dass die Empfängerausrüstung und/oder der mindestens eine Sollknoten als Funktion der mindestens einen Information zum Anpassen von Informationen über Mittel verfügt, die folgendes ermöglichen:
- das Anpassen des Inhaltes der durchzuführenden Operationen,
- und/oder das Anpassen der tatsächlich der Quelleneinrichtung (S) und/oder dem mindestens einen Kreditknoten zur Durchführung der besagten Operationen in Rechnung gestellten Kosten.

## Claims

1. A process for adapting the content and/or the cost of transmission and/or service operations carried out within a data packet transmission network (4), during a session between a source unit (S) and a destination unit (D) interconnected via at least one node (N1, N2, etc.) of said network, said destination unit and/or said at least one node being used by at least one operator and/or at least one service provider, said process being such that:
- in said source unit (S) and/or in at least one node, called a credit node, a credit gateway (PC) assigns to each data packet (1), sent by said source unit (S), a payment token (2) which has an initial value representing a credit of monetary units previously acquired from a toll centre (3);
- in said destination unit (D) and/or in at least one node, called a debit node, located downstream of said at least one credit node, a debit gateway (PD) modifies the payment token (2) assigned to each data packet (1) received, so as to reduce said payment token (2) initial value, by an amount representing the cost of the operations to be carried out, for said received packet, by said destination unit (D) and/or said at least one debit node;
- said destination unit (D) and/or each debit node, in which a said debit (PD) gateway is included, receives from said toll centre (3), for each packet received during said session, financial settlement of said representative amount;
**characterised in that** at least one of said payment tokens (2) includes, apart from said initial value representing a credit of monetary units, at least one operation adaptation datum, allowing said destination unit and/or said at least one debit node to adapt:
- the content of the operations to be carried out;
- and/or the cost actually billed to said source unit (S) and/or said at least one credit node, for carrying out said operations.

2. A process according to claim 1, **characterised in that** said at least one operation adaptation datum belongs to the group including data relating to the user, direct or indirect, of said source unit and/or said at least one credit node.

3. A process according to any one of claims 1 and 2, **characterised in that**, in order to adapt the actually billed cost, said destination unit and/or said at least one debit node carries out the following stages:
- determination of said actually billed cost, as a function of said at least one operation adaptation datum;
- reduction of said payment token initial value, by a pre-set average amount representing the average cost of the operations to be carried out;
- modification of the current value of an associated account relating to a user, direct or indirect, of said source unit and/or said at least one credit node, by addition or withdrawal of a sum as a function of the difference between said actually billed cost and said pre-set average amount.

4. A process according to any one of claims 1 and 2, **characterised in that**, in order to adapt the actually billed cost, said destination unit and/or said at least one debit node carries out the following stages:
- determination of said actually billed cost, as a function of said at least one operation adaptation datum;
- reduction of said payment token initial value, by a pre-set average amount representing the average cost of the operations to be carried out;
- return to said source unit and/or to said at least one credit node of a payment token which has a value function of the difference between said actually billed cost and said pre-set average amount, so that the value of said returned payment token is restored to a user, direct or indirect, of said source unit and/or said at least one credit node.

5. A process according to any one of claims 1 to 4, **characterised in that** said source unit is used by a provider of access to said data packet transmission network, and allows said access to be provided to at least one subscriber to said access provider, called an indirect user,
and **in that** said at least one operation adaptation datum is added to said packet by said access provider, and depends on the subscriber in respect of whom said access provider sends said packet.

6. A process according to claim 5, **characterised in that** said addition stage by said access provider of said at least one operation adaptation datum is billed at least partly to said destination unit and/or said at least one debit node.

7. A process according to any one of claims 1 to 6, **characterised in that** said payment token is assigned to a given packet by insertion into said packet and/or into at least one higher level encapsulating structure of said packet.

8. A process according to any one of claims 1 to 7, **characterised in that** said data packet transmission network (4) is a network of the Internet type.

9. A process according to any one of claims 1 to 8, **characterised in that** said service operations belong to the group including:
- information data supply operations;
- video data supply operations;
- audio data supply operations;
- cartography data supply operations.

10. A system for adapting the content and/or the cost of transmission and/or service operations carried out within a data packet (4) transmission network, during a session between a source unit (S) and a destination unit (D) interconnected via at least one node (N1, N2,...) of said network, said destination unit and/or said at least one node being used by at least one operator and/or at least one service provider, said process being such that:
- said source unit (S) and/or at least one node, called a credit node, includes a credit gateway (PC) making it possible to assign to each data packet (1), sent by said source unit (S), a payment token (2) which has an initial value representing a credit of monetary units previously acquired from a toll centre (3) ;
- said destination unit (D) and/or at least one node, called a debit node, located downstream of said at least one credit node, includes a debit gateway (PD) making it possible to modify the payment token (2) assigned to each data packet (1) received, so as to reduce said payment token initial value (2), by an amount representing the cost of the operations to be carried out, for said received packet, by said destination unit (D) and/or said at least one debit node;
- said destination unit (D) and/or each debit node, in which a said debit gateway (PD) is included, receives from said toll centre (3), for each packet received during said session, financial settlement of said representative amount;
**characterised in that** said system includes inclusion means in at least one of said payment tokens (2), apart from said initial value representing a credit of monetary units, of at least one operation adaptation datum,
and **in that** said destination unit and/or said at least one debit node includes adaptation means, as a function of said at least one operation adaptation datum:
- of the content of the operations to be carried out;
- and/or the cost actually billed to said source unit (S) and/or to said at least one credit node, for carrying out said operations.
